# EUROPÄISCHE PATENTSCHRIFT

(11) **EP 2 865 652 B1**
(45) Veröffentlichungstag und Bekanntmachung des Hinweises auf die Patenterteilung: **26.02.2020**
(21) Anmeldenummer: 14003503.1
(22) Anmeldetag: 13.10.2014
(51) Int. Cl.: C02F 3/12, C02F 3/22

(54) **Verfahren und Vorrichtung zur Optimierung einer Kleinkläranlage durch Vermeidung oder Verminderung des Austrages von Schlammpartikeln aus dem Druckluftheber für den Klarwasserabzug**
Method and device for optimizing a small sewage treatment plant by avoiding or reducing the output of sludge particles from the compressed air lifting system for clear water extraction
Procédé et appareil d'optimisation d'une petite station d'épuration par élimination ou réduction du rejet de particules de boue provenant du dispositif de levage pneumatique pour l'évacuation des eaux clarifiées

(30) Priorität: 28.10.2013 DE 102013017741
(43) Veröffentlichungstag der Anmeldung: 29.04.2015
(73) Patentinhaber: Boller, Reinhard, 57234 Wilnsdorf (DE)
(72) Erfinder: Boller, Reinhard, 57234 Wilnsdorf (DE)
(74) Vertreter: Haverkamp, Jens

(56) Entgegenhaltungen:
- EP-A1- 1 566 498
- DE-A1-102011 122 695
- DE-U1-202007 002 465

## Beschreibung

Die Erfindung betrifft einen SBR-Reaktor mit einer Einrichtung zur Vermeidung oder Verminderung des Austrages von Schlammpartikeln und mit einem Druckluftheber (Mammutpumpe) für Klarwasserabzug aus dem SBR-Reaktor, an welchen Druckluftheber über ein Verbindungsrohr ein weiterer Druckluftheber zum Abpumpen von vor dem Klarwasserabzug aus dem Druckluftheber für den Klarwasserabzug darin enthaltener/abgelagerter Schlammpartikel angeschlossen ist.

Kleinkläranlagen oder kleine Kläranlagen dienen der dezentralen Abwasserbeseitigung in ländlich strukturierten Gebieten, in denen aus wirtschaftlichen oder sonstigen Gründen heraus kein Kanalanschluss vorhanden ist oder hergestellt wird bzw. werden kann.

Hier wird die aus den bestehenden gesetzlichen Verpflichtungen heraus resultierende Notwendigkeit der Abwasserreinigung durch Kleinkläranlagen oder kleine Kläranlagen realisiert.
Viele dieser für die dezentrale Abwasserreinigung verwandten Kleinkläranlagen oder kleinen Kläranlagen arbeiten nach dem so genannten Belebtschlammverfahren. Eine besondere Ausgestaltung dieses Belebtschlammverfahrens sind beispielsweise die SBR Anlagen.
Im Gegensatz zur Belebungsanlage sind beim SBR-Reaktor Belebungsbecken und Nachklärbecken nicht räumlich voneinander getrennt. Im kombinierten Belebungsbecken / Nachklärbecken (SBR-Reaktor) findet die eigentliche biologische Abwasserreinigung statt. In dem SBR-Reaktor werden die Funktionen von Belebungsbecken und Nachklärbecken zeitlich voneinander getrennt. Im Prinzip wird der SBR-Reaktor eine bestimmte Zeit als Belebungsbecken genutzt, danach wird der gleiche Raum nach dem nachfolgend beschriebenen Schema als Nachklärbecken in Anspruch genommen. Die entsprechende zeitliche und funktionale Abfolge wird Zyklus genannt.

Ein Zyklus beginnt mit der sogenannten Füllphase. Dem SBR-Reaktor wird in einem bestimmten Zeitraum mittels Mammutpumpe mechanisch vorgereinigtes Abwasser aus der Vorklärung zugeführt. Während dieser Füllphase läuft parallel der Prozess der biologischen Abwasserreinigung.

Diese biologische Abwasserreinigung wird durch frei herumschwimmende Bakterien bewirkt, die sich zu sogenannten Belebtschlammflocken zusammenballen. Da auch beim Belebungsverfahren, wie bei allen anderen aeroben Abwasserreinigungsverfahren, Sauerstoff zum Abbau von organischen Verbindungen durch die Bakterien benötigt wird, wird dieser durch auf dem Boden des Belebungsbeckens liegende Belüftungseinrichtungen eingetragen. Hierdurch wird die ankommende Druckluft in feine Luftbläschen aufgeteilt und dem Abwasser zugeführt. Durch die danach folgende Aufwärtsbewegung der Luftblasen erfolgt eine stetige Vermischung des Abwassers mit den Belebtschlammflocken.

Die Luftversorgung der Belüftungseinrichtungen geschieht auch hier in einem sogenannten Pausenlaufzeitintervall.

Anschließend beginnt die Absetzphase. In dieser Zeit setzt sich der Belebtschlamm auf der Beckensohle ab. Das gereinigte und von Belebtschlamm befreite Abwasser befindet sich im oberen Bereich, die als Klarwasserzone bezeichnet wird. In diesem Zeitraum wird das zuvor als Belebungsbecken genutzte Behältervolumen als Nachklärbecken genutzt.

Nach Beendigung der Absetzphase läuft die Abzugsphase als die letzte Phase des Zyklus ab. Hier wird im oberen Beckenbereich aus der Klarwasserzone das gereinigte Abwasser mittels Mammutpumpe abgezogen und über einen kleinen Vorlagebehälter mit Überlauf dem Ablauf zugeführt. Dieser Vorlagebehälter ist notwendig, da die Abwasserreinigung im Zyklus (chargenweise) abläuft und somit nur zu bestimmten Zeiten am Tag eine gesicherte Probenahme möglich ist. Durch den stets gefüllten Vorlagebehälter ist eine jederzeitige Probenahme gesichert.

Dieses bewährte und in sehr vielen Anlagen bereits laufende Verfahren besitzt jedoch einen entscheidenden Nachteil. Während der Belüftungsphase wird durch die feinen Luftbläschen der SBR Reaktor vollkommen durchmischt. Dabei steigen mit den Luftbläschen ständig Belebtschlammflocken nach oben. Je nach Ausgestaltung der Mammutpumpe können sowohl die nach oben aufsteigenden Belebtschlammflocken als auch die wieder absinkenden Belebtschlammflocken in das Absaugrohr der Mammutpumpe gelangen. Dies führt zu einer entsprechenden Ablagerung von Belebtschlammflocken in dem Rohrsystem der Mammutpumpe für den Klarwasserabzug.

Wenn nach Beendigung des biologischen Reinigungsprozesses in der Absetzphase die Belebtschlammflocken sich absetzen, kann es ebenfalls je nach Gestaltung der Mammutpumpe zu Ablagerungen von Belebtschlammflocken in das Rohrsystem der Mammutpumpe kommen.

Diese Belebtschlammflocken, partikulären Stoffe oder Schlammbestandteile führen bei Einleitung in eine Versickerungsanlage, einem Sickerschacht, einer Untergrundverrieselung, einen Filtergraben zu einer Verstopfung beziehungsweise Verschlammung und damit zu einem Versagen der vorstehenden Anlagen, da das Abwasser nicht mehr versickert.

Bei Einleitung von Abwasser mit Belebtschlammflocken, partikulären Stoffe oder Schlammbestandteile in ein Gewässer entsteht eine unerlaubte Einleitung beziehungsweise eine Gewässerverschmutzung.

Da das Auftreten von Belebtschlammflocken, partikulären Stoffen oder Schlammbestandteilen im Ablauf der Kleinkläranlagen und kleinen Kläranlagen jederzeit passieren kann und die Folgen in der Regel erst oder häufig mit dem Schadensbild einer verstopften beziehungsweise verschlammten Versickerungsanlage (deren Funktion damit beeinträchtigt oder sogar komplett aufgehoben wird) bemerkt werden, entstehen hohe Kosten für die Beseitigung der Verstopfung beziehungsweise Verschlammung von Versickerungsanlage. Häufig müssen die Versickerungsanlagen komplett erneuert werden.

Zur Vermeidung des Austrages von Schlamm über den Druckluftheber der Klarwasser Mammutpumpe wurden bereits verschiedene Vorrichtungen/Verfahren entwickelt.

So beschreibt beispielsweise DE 20 2005 019918 einen Druckluftheber für den Klarwasserabzug, bei dem im Einlaufbereich des Drucklufthebers eine Rückschlagklappe eingebaut ist, um das Eindringen von Schlammpartikeln während der Belüftung zu reduzieren. Die Rückschlagklappe kann jedoch leicht in ihrer Funktion durch Störstoffe/Verstopfungen beeinträchtigt beziehungsweise außer Funktion gesetzt werden.

Im europäischen Patent EP 1 566 498 wird beschrieben, dass mit einem zusätzlichen Rohr und einer zusätzlicher Luftleitung die Rohrleitung des Drucklufthebers vor dem eigentlichen Klarwasserabzug in das Belebungsbecken entleert wird. Diese Funktion kann eigentlich erst zum Ende der Absetzphase durchgeführt werden, um erneutes Eindringen von Schlamm während des Absetzvorganges zu verhindern. Wenn das zusätzliche Rohr den Schlamm aus den Rohrleitungen des Drucklufthebers in das Belebungsbecken herausdrückt, kommt es zu entsprechenden Turbulenzen, die natürlich den Absetzvorgang behindern. Nach dem Entleeren der Rohrleitungen ist eine erneute Zeit zur Sedimentation erforderlich, damit der ausgetragene Schlamm sedimentiert, damit er nicht beim Klarwasserabzug von dem Druckluftheber erneut angesaugt wird.

Weiterhin ist bekannt, dass es verschiedene konstruktive Ausgestaltungen im Ansaugbereich der Mammutpumpe für den Klarwasserabzug gibt, um das Eindringen von Belebtschlamm zum Beispiel während des Belüftungsvorganges zu erschweren beziehungsweise zu reduzieren.

Auch ist bekannt, dass der Ansaugbereich des Drucklufthebers in Form eines Syphons ausgebildet werden kann, in den mittels eines Kompressors Luft eingetragen wird, um das Eindringen eines Schlamm-Wassergemisches während der Belüftung durch eine entsprechende Luftblase möglichst zu verhindern. Auch diese Vorrichtung kann nicht dauerhaft/kontrolliert sicherstellen, dass kein Schlamm während der Belüftung eindringen kann.

Alle vorstehenden bekannten Technologien sind jedoch durch einen entsprechenden hohen Aufwand im konstruktiven Bereich durch zusätzliche Bauteile/Komponenten/Energiezufuhr gekennzeichnet. Weiterhin ist bei diesen Verfahren/Vorrichtungen von Nachteil, dass sie nur in gewissem Ausmaß die Schlammproblematik reduzieren können. Ein vollständiges und dauerhaftes Vermeiden des Austrages von Schlamm kann mit den vorstehenden Verfahren/Vorrichtungen nicht erreicht werden.

Der hier beschriebenen Erfindung liegt die Aufgabe zugrunde, nicht nur auf einfache Weise den Austrag von Schlamm, der während des Reinigungsprozesses in den Druckluftheber für den Klarwasserabzug eingedrungen ist, vor dem eigentlichen Klarwasserabzug wieder aus dem Druckluftheber für den Klarwasserabzug zu entfernen, sondern auch sicherzustellen, dass eine Rekontamination von Klarwasser vermieden ist.

Diese Aufgabe wird durch eine Kläranlage mit den Merkmalen des Anspruchs 1 sowie mit dem Verfahren gemäß Anspruch 4 gelöst.

Dazu sieht die Erfindung im wesentlichen vor, dass an der Mammutpumpe/dem Druckluftheber für den Klarwasserabzug ein weiterer Druckluftheber angeschlossen ist, dessen Auslauf in eine andere Behandlungsstufe oder in einen sonstigen Behälter oder Kammer mündet.

Grundsätzlich kann sowohl die Vorrichtung als auch das Verfahren bei allen Abwasserbehandlungsanlagen, bei denen ein Druckluftheber oder eine Pumpe oder sonstiges Förderaggregat für den Klarwasserabzug eingesetzt wird, angewandt werden.

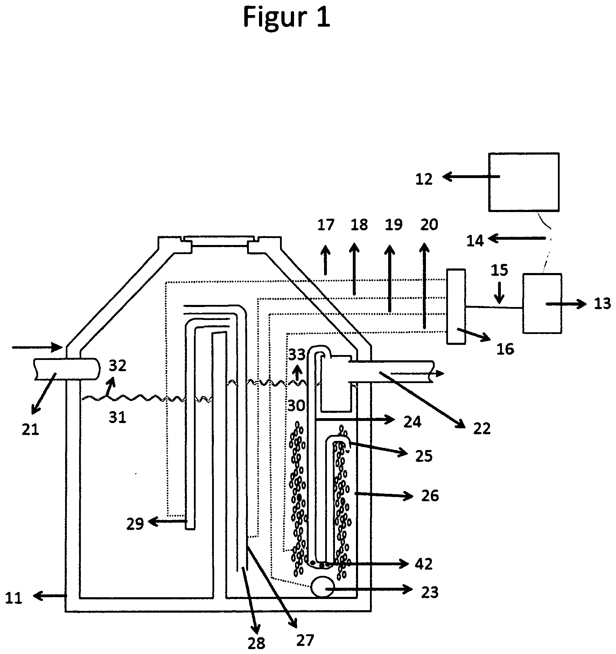

In der **Figur 1** ist beispielsweise eine SBR Anlage nach dem Stand der Technik dargestellt. Ein Behälter [11] ist beispielhaft in 2 Behandlungsstufen [31] und [30] aufgeteilt. Die Behandlungsstufe [31] stellt den Bereich für den Schlammspeicher und Puffer dar. Die Behandlungsstufe [30] stellt den SBR-Reaktor dar. Eine Steuerung [12] schaltet bei Bedarf über die Steuerleitung [14] den Verdichter/Kompressor [13] ein. Über eine Luftleitung [15] wird die vom Verdichter [13] komprimierte Luft an das Luftverteilersystem [16] geleitet. Dieses Luftverteilersystem [16] verteilt die Druckluft entsprechend den Steuerbefehlen der Steuerung [12] durch Magnetventile oder Schrittmotoren oder ähnliche Komponenten an die Luftversorgungsleitungen [17] (für die Beschickung), [18] (für den Überschussschlammabzug), [19] (für die Belüftung) beziehungsweise [20] (für den Klarwasserabzug).

Ein SBR-Zyklus startet in der Regel mit der so genannten Beschickung. Aus der Behandlungsstufe [31] im Bereich des Puffers wird gesammeltes Abwasser über den Druckluftheber [29] in die Behandlungsstufe [30] (SBR-Reaktor) gefördert. Anschließend wird in dem SBR-Reaktor [30] das Abwasser über die Belüftungsvorrichtung [23] belüftet. Durch den Belüftungsvorgang (aufsteigende Luftblasen: [26]) wird das Abwasser vermischt und gleichzeitig mit Sauerstoff angereichert. Während des Belüftungsvorganges kommt es häufig zum Eintrag von Schlammpartikeln in den Ansaugbereich [25] des Drucklufthebers [24] für den Klarwasserabzug.

Die Überschußschlammpumpe [27] fördert über die Ansaugöffnung [28] überschüssigen Belebtschlamm aus der Behandlungsstufe [30] in die Behandlungsstufe [31]. Die Überschußschlammförderung kann beispielsweise während der Belüftung, vor der Absetzphase, vor oder nach dem Klarwasserabzug erfolgen.

Nach der biologischen Reinigung erfolgt die Absetzphase, in der sich in der Behandlungsstufe [30] der Belebtschlamm auf der Sohle der Behandlungsstufe [30] des Behälters [11] absetzt. Nach der Absetzphase erfolgt über den Druckluftheber [24] der Klarwasserabzug. Durch das Beaufschlagen des Drucklufthebers 24 mit Druckluft über die Leitung [20] wird das Abwasser in den Ablauf [22] gefördert. Über die Ansaugöffnung [25] des Klarwasserhebers [24] gelangt gereinigtes Abwasser in den Druckluftheber, bis der Wasserspiegel [33] unterhalb der Ansaugöffnung [25] gesunken ist. Das Problem beim Klarwasserabzug besteht darin, dass die während des Belüftungsvorganges in den Druckluftheber eingedrungene Schlammpartikel [42] zu Beginn des Klarwasserabzuges durch den Betrieb des Drucklufthebers in den Ablauf [22] gelangen und somit schlechte Reinigungswerte bedingen beziehungsweise eine der Anlage nachgeschaltete Versickerungsanlage durch die Schlammpartikel zugesetzt wird.

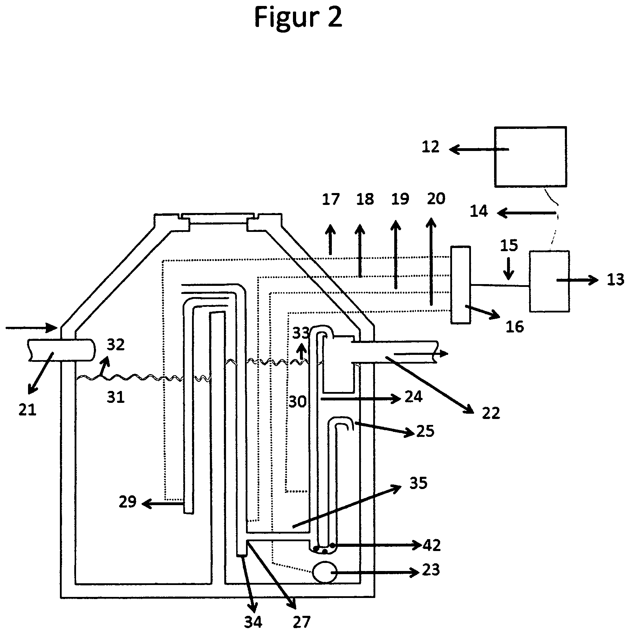

Die Erfindung sieht nun in einer beispielhaften Ausführung gemäß **Figur 2** vor, dass bei dem Druckluftheber für den Überschussschlammabzug [27] die Ansaugöffnung [34] verschlossen ist. Weiterhin ist gemäß Abbildung 2 der Druckluftheber für die Überschussschlammabzug [27] über ein Verbindungsrohr [35] im unteren Bereich mit dem Druckluftheber für den Klarwasserabzug [24] verbunden.

Durch eine entsprechende Programmierung der Steuerung wird vor dem eigentlichen Klarwasserabzug (also beispielsweise während oder nach der Absetzphase) der Druckluftheber für den Überschußschlamm [27] über die Luftleitung [18] aktiviert (betrieben). Da die Ansaugöffnung [34] verschlossen ist, kann die zu fördernde Flüssigkeit nur über die Öffnung [25] des Drucklufthebers [24] in den Druckluftheber [27] gelangen. Da nach der Absetzphase im Bereich der Ansaugöffnung [25] sich nur gereinigtes klares Wasser befindet, wird durch den Betrieb des Drucklufthebers [27] durch die Verbindungsleitung [35] gereinigtes Wasser angesaugt. Sämtliche Schlammablagerungen innerhalb des Drucklufthebers [24] werden nun durch die Ansaugung von gereinigtem Abwasser mit in den Druckluftheber [27] gefördert und in die Behandlungsstufe [31] gepumpt. Im Prinzip wird dadurch der Druckluftheber [24] von Schlammablagerungen gereinigt. Nach dem Abschalten des Drucklufthebers [27] verbleibt in dem Druckluftheber [24] nur noch gereinigtes sauberes Abwasser ohne Schlammpartikel.

Da anschließend über die Steuerung [12] und das Verteilsystem [16] die vom Verdichter [13] erzeugte Luft über die Luftleitung [20] zum Druckluftheber [24] (Klarwasserabzug) strömt und dadurch der Druckluftheber [24] gereinigtes Abwasser aus der Anlage in den Ablauf [22] fördert, werden keine Schlammrückstände aus der Anlage herausgefördert, da diese bereits vor dem Klarwasserabzug vollständig über den Druckluftheber [27] in die Behandlungsstufe [31] entfernt wurden.

In einer weiteren Ausgestaltung kann weiterhin Überschußschlamm gemäß Abbildung 2 aus der Behandlungsstufe [30] in die Behandlungsstufe [31] gefördert werden, indem zum Beispiel während oder nach einer Belüftung, wenn sich der Belebtschlamm noch im Bereich der Ansaugöffnung [25] befindet, der Überschussschlammabzug aktiviert wird, so dass über die Ansaugpunkt [25] und das Verbindungsrohr [35] ein Belebtschlamm - Wassergemisch durch den Druckluftheber [27] in die Behandlungsstufe [31] gefördert wird. Obwohl nach einem solchen Fördervorgang naturgemäß ebenfalls nach dem Abschalten des Fördervorganges Schlammbestandteile im Rohrleitungssystem des Drucklufthebers [24], der Verbindungsleitung [35] sowie des Drucklufthebers [27] verbleiben, stellt dies kein Problem dar, da vor dem eigentlichen späteren Klarwasserabzug (während oder nach der Absetzphase) nochmals der Druckluftheber [27] in Betrieb gesetzt wird und somit alle damit in Verbindung stehenden Rohrleitungen über die Ansaugung von gereinigtem Abwasser gespült und gereinigt werden.

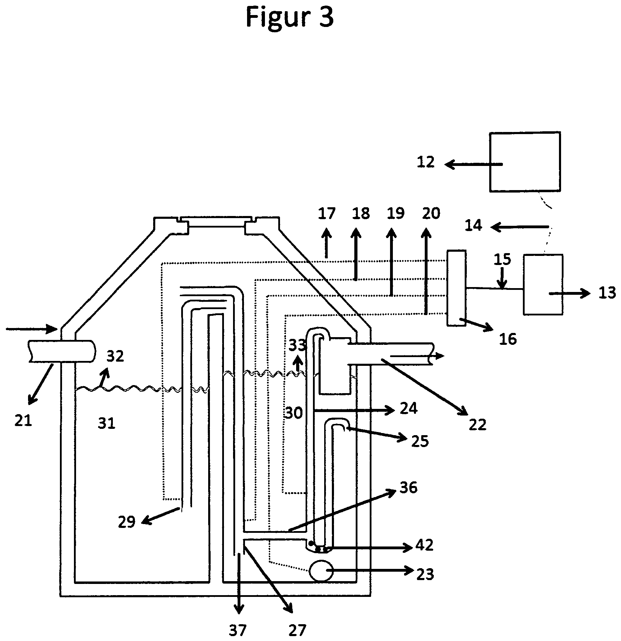

In der Abbildung 3 ist eine weitere mögliche Ausgestaltung der Erfindung dargestellt. Hier ist bei dem Druckluftheber [27] für den Überschussschlammabzug das untere Rohrende [37] geöffnet. Damit kann beim Betrieb des Drucklufthebers [27] während des Fördervorganges sowohl eine Ansaugung über die Öffnung [37] als auch über die Öffnung [25] erfolgen. In einer beispielhaften Ausgestaltung kann das Verhältnis der über die beiden Öffnungen [37] und [25] angesaugten Abwassermengen über die Gestaltung der Größe der Öffnungen [37] und [25] variiert werden. Wird zum Beispiel die Öffnung [37] in ihrem Öffnungsquerschnitt reduziert, wird im Verhältnis mehr Wasser über die Öffnung [24] angesaugt. Wird zum Beispiel die Öffnung [25] in ihrem Öffnungsquerschnitt reduziert, wird im Verhältnis mehr Wasser über die Öffnung [37] angesaugt. In einer weiteren Ablaufgestaltung können im Bereich der Ansaugöffnungen [37] und [25] entsprechende verstellbare Querschnitte, verstellbare Regelorgane oder sonstige in ihrem Querschnitt oder Durchsatzmenge veränderbaren Komponenten eingebaut beziehungsweise verwendet werden. Es könnten auch die Öffnungen über Regelorgane mechanisch oder elektrisch über die Steuerung [12] geöffnet und geschlossen beziehungsweise in ihrem Öffnungsquerschnitt verändert werden.

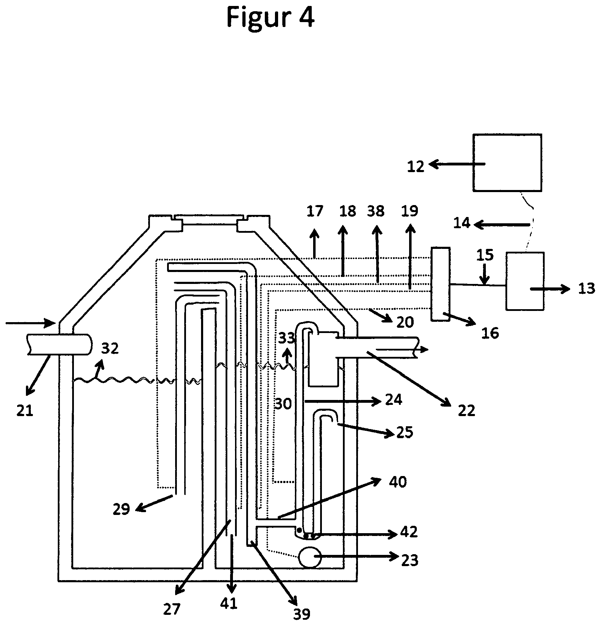

In einer weiteren beispielhaften Ausgestaltung gemäß Abbildung 4 ist an den Druckluftheber [24] für den Klarwasserabzug über das Verbindungsrohr [40] ein zusätzlicher Druckluftheber [39] eingebaut, der über eine zusätzliche Druckluftleitung [38] in Verbindung mit einer Ansteuerung des Verteilers [16], des Kompressors [13] und der Steuerung [12] betrieben wird. Durch die Anordnung des zusätzlichen Drucklufthebers [39] erfolgt die Reinigung des Drucklufthebers für den Klarwasserabzug unabhängig vom Überschussschlammabzug. Wichtig ist, dass dieser zusätzliche Druckluftheber [39] die Reinigung des Rohrleitungssystems des Drucklufthebers [24] durch das Verbindungsrohr [40] vor dem eigentlichen Klarwasserabzug reinigt, damit beim Klarwasserabzug keine Schlammbestandteile mehr im Rohrleitungssystem des Drucklufthebers [24] vorhanden sind.

Weitere mögliche Ausgestaltungen des Verfahrens sind:
- die zeitliche Abfolge der unterschiedlichen Vorgänge kann hinsichtlich Dauer und Zeitpunkt und Anzahl variieren
- die Vorrichtung und das Verfahren kann auch in bestehenden Anlagen nachgerüstet werden
- Material und Durchmesser der Rohrleitungen können variieren
- die Verbindungsleitung zwischen dem Druckluftheber für den Klarwasserabzug und dem Druckluftheber für den Überschussschlammabzug beziehungsweise in alternativer Ausführung dem zusätzlichen Druckluftheber kann eine feste Rohrleitung oder ein Schlauch sein
- die Pumpe, die mit den Druckluftheber für den Klarwasserabzug verbunden ist und den Druckluftheber für den Klarwasserabzug vor dem eigentlichen Klarwasserabzug durch einen Fördervorgang reinigt, kann auch eine elektrische Pumpe oder ein sonstiges Förderaggregat sein
- dass bei der Reinigung des Drucklufthebers für den Klarwasserabzug geförderte Abwasser mit Schlammpartikeln kann in jede vorhandene Behandlungsstufe der Kläranlage oder eine zusätzliche Behandlungsstufe oder Kammer oder Behälter befördert werden.
- Die Pumpe/der Druckluftheber, die mit dem Druckluftheber für den Klarwasserabzug verbunden ist, kann auch weitere Funktionen in der Kläranlage übernehmen
- die Vorrichtung und das Verfahren sind auch anwendbar, wenn das Klarwasser in der Kläranlage nicht mit einem Druckluftheber, sondern mit einer Tauchpumpe gefördert wird. In diesem Fall wird einfach die Pumpe / der Druckluftheber zur Reinigung der Pumpe für den Klarwasserabzug an die Pumpe für den Klarwasserabzug oder den/das in Verbindung mit der Pumpe für den Klarwasserabzug stehenden Schlauch oder Rohrleitungssystem oder die Pumpe selbst angeschlossen.

## Patentansprüche

1. SBR-Reaktor mit einer Einrichtung zur Vermeidung oder Verminderung des Austrages von Schlammpartikeln und mit einem Druckluftheber (Mammutpumpe) (24) für Klarwasserabzug aus dem SBR-Reaktor (30), an welchen Druckluftheber (24) über ein Verbindungsrohr (35, 36, 40) ein weiterer Druckluftheber (27, 39) zum Abpumpen von vor dem Klarwasserabzug aus dem Druckluftheber (24) für den Klarwasserabzug darin enthaltener/abgelagerter Schlammpartikel angeschlossen ist, **dadurch gekennzeichnet, dass** das Verbindungsrohr (35, 36, 40) im unteren Bereich des Drucklufthebers (24) für den Klarwasserabzug mit diesem verbunden ist und der Auslauf des weiteren Drucklufthebers (27, 39) oberhalb des Wasserspiegels (33) des SBR-Reaktors (30) liegt, wobei der weitere Druckluftheber (27, 39) mit seinem Auslauf in einen sonstigen Behälter oder Kammer oder eine andere Behandlungsstufe mündet.

2. SBR-Reaktor nach Anspruch 1, **dadurch gekennzeichnet, dass** das untere Rohrende des weiteren Drucklufthebers (27) geöffnet ist.

3. SBR-Reaktor nach Anspruch 2, **dadurch gekennzeichnet, dass** der Öffnungsquerschnitt des unteren Rohrendes (37) sich von dem Öffnungsquerschnitt der Ansaugöffnung (25) für den Klarwasserabzug unterscheidet.

4. Verfahren zur Optimierung des Betriebs eines SBR-Reaktors durch Vermeidung oder Verminderung des Austrages von Schlammpartikeln, **dadurch gekennzeichnet, dass** vordem eigentlichen Klarwasserabzug durch einen entsprechenden Steuerbefehl mittels einer an den Druckluftheber (Mammutpumpe) (24) für den Klarwasserabzug über ein Verbindungsrohr (35, 36, 40), das im unteren Bereich mit dem Druckluftheber (24) verbunden ist, angeschlossenen weiteren Druckluftheber (27, 39) der Druckluftheber (24) für den Klarwasserabzug von Schlammablagerungen gereinigt wird, wobei der Auslauf des weiteren Drucklufthebers (27, 39) oberhalb des Wasserspiegels des SBR-Reaktors (30) liegt, wobei durch den weiteren Druckluftheber (27, 39) die in dem Druckluftheber (24) für den Klarwasserabzug enthaltenen Schlammpartikel in eine andere Behandlungsstufe (31) oder einen sonstigen Behälter oder Kammer gefördert werden.

5. Verfahren nach Anspruch 4, **dadurch gekennzeichnet, dass** bei einem Betrieb des Drucklufthebers (27) für den Überschussschlammabzug während des Fördervorganges sowohl eine Ansaugung über eine Öffnung (37) zum Ansaugen von Überschussschlamm als auch über eine Öffnung (25) zum Abpumpen von in dem Druckluftheber (24) oder dem Druckluftheber (24, 27, 39) für den Klarwasserabzug enthaltenen Schlammpartikeln erfolgt.

## Claims

1. SBR reactor with a device for avoiding or reducing the output of sludge particles and with a compressed air lifting system (Mammut pump) (24) for clear water extraction from the SBR reactor (30), connected to which compressed air lifting system (24), by means of a connection pipe (35, 36, 40), is a further compressed air lifting system (27, 39) for pumping out sludge particles, upstream of the clear water extraction from the compressed air lifting system (24) for the clear water extraction, which are contained/deposited therein, **characterised in that** the connection pipe (35, 36, 40) is connected to the compressed air lifting system (24) for the clear water extraction in its lower area, and the outlet of the further compressed air lifting system (27, 39) lies above the water level (33) of the SBR reactor (30), wherein the further compressed air lifting system (27, 39) opens with its outlet into another different container or chamber, or into another treatment step.

2. SBR reactor according to claim 1, **characterised in that** the lower pipe end of the further compressed air lifting system (27) is open.

3. SBR reactor according to claim 2, **characterised in that** the opening cross-section of the lower pipe end (37) differs from the opening cross-section of the suction opening (25) for the clear water extraction.

4. Method for optimisation of the operation of an SBR reactor by avoiding or reducing the output of sludge particles, **characterised in that,** before the actual clear water extraction, by way of a corresponding control command, and by means of a further compressed air lifting system (27, 39), connected to the compressed air lifting system (Mammut pump) (24) for the clear water extraction by means of the connection pipe (35, 36, 40), which is connected to the compressed air lifting system (24), the compressed air lifting system (24) is cleaned, wherein the outlet of the further compressed air lifting system (27, 39) lies above the water level of the SBR reactor (30), wherein, by means of the further compressed air lifting system (27, 39), the sludge particles contained in the compressed air lifting system (24) for the clean water extraction are conveyed into another treatment step (31) or into another container or chamber.

5. Method according to claim 4, **characterised in that,** during an operation of the compressed air lifting system (27) for the surplus sludge extraction during the conveying procedure, a suction takes place by way of an opening (37) for the suctioning of surplus sludge, as well as by way of an opening (25) for pumping sludge particles contained in the compressed air lifting system (24) or the compressed air lifting system (24, 27, 39) for the clear water extraction.

## Revendications

1. Réacteur SBR comportant un équipement d'élimination ou de réduction du rejet de particules de boue et avec un dispositif de levage pneumatique (pompe mammouth) (24) pour soutirer de l'eau clarifiée du réacteur SBR (30), sur lequel dispositif de levage pneumatique (24) est raccordé, par le biais d'un tuyau de raccordement (35, 36, 40), un autre dispositif de levage pneumatique (27, 39) destiné à pomper, avant le soutirage de l'eau clarifiée, des particules de boues contenues/déposées dans le dispositif de levage (24) pour soutirer de l'eau clarifiée, **caractérisé en ce que** le tuyau de raccordement (35, 36, 40) est raccordé au dispositif de levage pneumatique (24) pour le soutirage d'eau clarifiée, dans la partie basse de celui-ci, et que l'écoulement de l'autre dispositif de levage pneumatique (27, 39) est situé en surplomb du niveau d'eau (33) du réacteur SBR (30), l'autre dispositif de levage pneumatique (27, 39) débouchant par son écoulement dans un conteneur ou sas divers ou vers une autre étape de traitement.

2. Réacteur SBR selon la revendication 1, **caractérisé en ce que** l'extrémité inférieure du tuyau de l'autre dispositif de levage pneumatique (27) est ouverte.

3. Réacteur SBR selon la revendication 2, **caractérisé en ce que** la section d'ouverture de l'extrémité inférieure du tuyau (37) se différencie de la section d'ouverture de l'ouverture d'aspiration (25) pour le soutirage d'eau clarifiée.

4. Procédé d'optimisation du fonctionnement d'un réacteur SBR par élimination ou réduction du rejet de particules de boue, **caractérisé en ce que** le dispositif de levage pneumatique (24) pour le soutirage d'eau clarifiée est nettoyé avant le soutirage effectif de l'eau clarifiée, à la suite d'une commande correspondante, au moyen d'un autre dispositif de levage pneumatique (27, 39) raccordé au dispositif de levage pneumatique (pompe mammouth) (24) pour le soutirage d'eau clarifiée par un tuyau de raccordement (35, 36, 40) raccordé, dans la partie basse, avec le dispositif de levage pneumatique (24), l'écoulement de l'autre dispositif de levage pneumatique (27, 39) étant situé en surplomb du niveau d'eau du réacteur SBR (30), les particules de boue contenues dans le dispositif de levage pneumatique (24) pour le soutirage d'eau clarifiée étant acheminées par l'autre dispositif de levage pneumatique (27, 39) vers une autre étape de traitement (31) ou vers un conteneur ou sas divers.

5. Procédé selon la revendication 4, **caractérisé en ce que** lors du fonctionnement du dispositif de levage pneumatique (27) pour le soutirage des boues en excès, il se produit, pendant le processus d'acheminement, à la fois une aspiration par une ouverture (37) pour aspirer les boues en excès ainsi que par une ouverture (25) pour évacuer par pompage des particules de boue contenues dans le dispositif de levage pneumatique (24) ou dans le dispositif de levage pneumatique (24, 27, 39) pour le soutirage d'eau clarifiée.
